# EUROPEAN PATENT APPLICATION

(11) **EP 1 090 938 A2**
(43) Date of publication of application: **11.04.2001**
(21) Application number: 00120736.4
(22) Date of filing: 22.09.2000
(51) Int. Cl.: C08F 279/02, C08L 55/00, B29D 30/54

(54) **Extrudable rubber composition for splicing a tyre tread**

(30) Priority: 05.10.1999 US 412302
(71) Applicant: THE GOODYEAR TIRE & RUBBER COMPANY, Akron, Ohio 44316-0001 (US)
(72) Inventor: Cowling, Teddy Ben, Akron, OH 44313 (US); Majumdar, Ramendra Nath, Hudson, OH 44236 (US)
(74) Representative: Leitz, Paul

(57) **Abstract**

Retreaded tires (10) are made using a hot extruded splice strip of either natural rubber or a high-synthetic rubber to directly adhere the ends of a precured tire tread (40) together. The retreaded tire, which also contains an uncured cushion strip (30) between the tire tread (40) and a buffed carcass (20), is then heated to cure the tread splice (50) as well as the tire cushion (30).

## Description

### Field Of Invention

Tire splices for retread tires are made by applying a hot, natural rubber or high-synthetic rubber extrudate directly between the ends of a cured tire tread.

### Background Of The Invention

Heretofore, for making a retread tire, tire splices have been formed by applying an adhesive to the ends of the cured tire tread. Calendered natural rubber was then added between the tread ends and subsequently cured. Such procedure is well known to those having skill in such art.

US-A- 5,503,940 to Majumdar et al. relates to using a calendered high-synthetic rubber compounds which was applied to the ends of the cured tire treads without any adhesive.

### Summary Of The Invention

In a retread tire the present invention utilizes a hot extrudate to splice together the ends of a typically cured tire tread which is applied to a buffed casing as defined in the claims. The hot extrudate tire splice can either contain a high percentage of natural rubber, or preferably a high percentage of synthetic rubber which is applied to the ends of a cured tire tread.

### Brief Description Of The Drawing

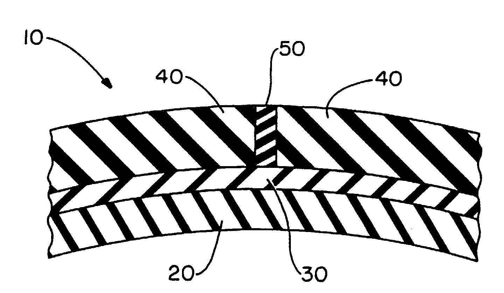

FIGURE 1 is a partial side elevation of a schematic cross section of a retread tire having a tire splice according to the present invention.

### Detailed Description Of The Invention

Referring to FIGURE 1, a retread tire generally indicated by the numeral 10, contains carcass layer 20, which generally contains various belts and plies therein. For example, carcass 20 can contain one or more steel belts as well as one or more plies made of rayon, polyester, fiberglass, nylon, and the like. The plies can either extend in a bias direction or in a radial direction.

Tire cushion 30 is located on top of tire carcass 20 and generally adhered thereto. The tire cushion 30 is cured with the tire splice. The tire cushion 30 can be made of a high percentage or amount of natural rubber, or generally any type of high percentage or amount of synthetic rubber, or blends thereof. Suitable types of synthetic rubbers include those made from conjugated dienes having generally from 4 to 12 carbon atoms and, preferably from 4 to 8 carbon atoms such as butadiene, isoprene, from conjugated dienes having from 4 to 12 carbon atoms with monomers of vinyl substituted aromatics having from 8 to 12 carbon atoms such as styrene, alpha-methylstyrene, and the like. Examples of suitable synthetic rubbers include polybutadiene, polyisoprene, styrene-butadiene rubber, and the like. Such rubbers are well known to the art and to the literature and can be compounded with conventional amounts of various additives such as oil, fillers such as carbon black, clay, and the like, processing aids, zinc oxide, stearic acid, sulfur, various accelerators, antioxidants, antiozinates, and the like. A highly preferred high tack compound based on a high percentage synthetic rubber compound is described in US-A- 5,503,940. By the term "high tack" it is meant that the rubber, or cushion substrate, provides a sticky composition which provides for a physical union of one vulcanized substrate to a second vulcanized substrate until both substrates can be vulcanized to each other.

The tire cushion compound of the '940 patent not only has high tack, but is referred to as a high percentage synthetic rubber compound, inasmuch as it contains generally at least 40% by weight, desirably at least 50% by weight, and preferably at least 55% by weight of synthetic rubber which is blended with natural rubber. As set forth in the '940 patent, the synthetic rubber contains at least one bis-imide therein and generally also contains one or more compatible tackifying agents known to the art and to the literature. Such tackifying agents generally include rosin and its derivatives, as well as various hydrocarbon resins, which are set forth in the '940 patent. A preferred type of such a tackifier are the various phenol-formaldehyde resins. Alternatively, the tire cushion compound can be a high percentage natural rubber meaning that it generally contains at least 90% by weight, desirably at least 95% by weight, and preferably 100% by weight of natural rubber therein based upon the total weight of all rubbers.

Any suitable or desired type of rubber can be utilized for tire tread 40, such as natural rubber, synthetic rubber such as that made from conjugated dienes having from 4 to 12 carbon atoms, copolymers made from conjugated dienes having from 4 to 12 carbon atoms and vinyl substitute aromatics having from 8 to 12 carbon atoms. While tire tread 40 can be uncured, preferably it is cured.

Heretofore, tire splice 50 was generally a thin strip of calendered and uncured natural rubber. However, before it was applied between the ends of cured tire tread 40, an adhesive was applied then thereto. Then, the thin calendered natural rubber was applied between the tread ends and cured.

According to the present invention, tire splice 50 is an extrudate which is applied, while still hot or warm, between the ends of the cured tire tread and cured. That is, the ends of the tire tread are free of adhesive other than said extrudate. An example of a suitable extruder is a cold feed hand-held extruder having a circular die manufactured by the Bosch Company of Germany, which was modified with a detachable slit die. The extrudate is generally applied to only one end of a tire tread. The remaining end is then pushed against the extrudate to form a seal or splice between the two tread ends.

The spliced extrudate compound can be the same as a tire cushion 30 as set forth hereinabove and, thus, is fully incorporated by reference. That is, the splice extrudate can be either a high percentage synthetic rubber and, thus, generally contains at least 40% by weight, desirably at least 50% by weight, and preferably at least 55% by weight of synthetic rubber which is blended with natural rubber. Alternatively, the splice extrudate compound can be a high percentage natural rubber containing at least 90% by weight, desirably at least 95% by weight, and preferably 100% by weight of natural rubber therein based upon the total weight of all rubbers. A preferred spliced extrudate compound is a high tack, high percentage synthetic rubber such as that set forth in US-A- 5,503,940. This rubber contains a bis-imide compound as well as various tackifiers therein such as rosin, hydrocarbon resins, phenol-formaldehyde resins, and the like.

Once the extruded spliced rubber such as natural rubber, or a blend of natural rubber with a high amount or percentage of synthetic rubber, has been added to the splice area, it is cured. Curing is obtained by heating the retread tire for a sufficient time at a suitable temperature to crosslink the tire splice, as well as the tire cushion if the same has not been cured. Suitable curing times and temperatures can vary such as temperatures from 210°F (99°C) to 310°F (155°C) at times of from 1 to 4 hours, and the like. Optionally, before curing, metal staples or other suitable devices can be utilized to maintain the two tire tread ends in position until cure is completed, where upon they are removed. The tire splice compound contains conventional amounts of conventional additives such as various oils, for example naphthenic, aliphatic, etc., fillers such as carbon black, clay, etc., various processing aids, zinc oxide, stearic acid, sulfur, various accelerators, antioxidants, antiozonants, and the like. According to the present invention, the ends of the tire tread do not have any cement applied thereto which generally contains VOC (volatile organic compounds) such as solvents and, thus, is undesirable.

The tire splice compound, upon cure, generally has adhesion of at least 100 pounds per linear inch (18 kg/cm) with either end of the tire tread.

The invention will be better understood by reference to the following examples.

### EXAMPLES

Four identical types of worn tires were buffed. To two of the tires was applied a calendered natural rubber cushion and to the remaining two tires was applied an extruded high percentage synthetic rubber. The compositions of the cushions are set forth in Table I. In order to obtain a true comparison of properties, the ends of the tread were coated with cement for both the extruded splice and the calendered splice examples. However, as noted above, the ends of the tire tread do not require a cement or an adhesive, which contain solvent and hence VOC (*vide infra*). According to the present invention, and the extrudate is thus directly applied to the tire tread ends having no adhesive thereon.

Table II contains the makeup of the four tires with regard to the type of cushion and type of splice as well as test data. The formulation of the natural rubber splice and the synthetic rubber splice is the same as the formulation set forth in Table I. The calendered rubbers had a thickness of 1.7 mm and were applied to one end of a cured tread which was subsequently joined to the other end of the cured tread and secured together to form the tire splice.

The natural rubber spliced material was cut into one-inch (2.5 cm) wide strips. Two such strips were combined and passed through a Haake System 90, one-inch (2.5 cm) diameter single-screw Rheomix rubber extruder attached with a one-quarter-inch (0.64 cm) diameter die. The set temperature was 77°C. The rope feed formed, thereby, had a diameter of 0.26 inches (0.64 cm) and was extruded at the rate of 26.4 inches (67 cm) per minute.

The high percentage synthetic rubber material was passed through a Haake System 90 1-inch (2.5 cm) diameter single-screw Rheomix rubber extruder attached with a one-quarter-inch (0.64 cm) diameter die. The set temperature was 77°C. The rope feed formed, thereby, had a diameter of 0.27 inches (0.69 cm) and was extruded at the rate of 29.5 (75 cm) inches per minute.

Both the extruded natural rubber as well as the extruded high percentage synthetic rubber rope feeds were applied directly onto a precured tread splice of a tire, as indicated in FIGURE 1, utilizing a modified hand-held extruder having slit die geometry of 1.0x10 mm.

**TABLE I**

| | **Synthetic Cushion** | **All NR Cushion** |
|---|---|---|
| High Cis Polybutadiene | 60.00 | |
| Natural Rubber | 40.00 | 100.00 |
| Carbon Black | 50.00 | 40.00 |
| Tackifiers | 8.00 | 8.50 |
| Processing Oils | 6.50 | 11.00 |
| Antiox/Antioz | 1.50 | 3.00 |
| Perkalink® 900 | 1.50 | |
| Peptizer | | 0.30 |

In addition to the above ingredients, conventional rubber additives such as zinc oxide, fatty acids, retarders, insoluble sulfur, and accelerators were added to the above formulation. The accelerators include one or more of the following; sulfenamides, thiazoles, guanidines, thiurams, or dithiocarbamates.

**TABLE II**

| | **Invention** | **Control** | **Control** | **Invention** |
|---|---|---|---|---|
| Tire Cushion | Calendered Natural Rubber | Calendered Natural Rubber | Extruded High-Synthetic | Extruded High-Synthetic Rubber⁴ |
| Splice Material | Extruded Natural Rubber⁴ | Calendered Natural Rubber | Calendered Natural Rubber | Extruded High-Synthetic* |

| **Dynamic Heat Rise - Radial Medium Truck Tire Test** | | | | |
|---|---|---|---|---|
| | **Finish** | **Finish** | **Finish** | **Finish** |
| Temp-CR¹ °C | 99 | 99 | 94 | 100 |
| Temp-ISSR² °C | 110 | 108 | 102 | 109 |
| Temp-OSSR³ °C | 107 | 108 | 102 | 107 |

| **Dynamic High Speed - Radial Medium Drive Tire Test** | | | | |
|---|---|---|---|---|
| Run till step # | 6 | 7 | 6 | 6 |
| Min/kph | 45/130 | 15/140 | 40/130 | 31/130 |
| km | 523 | 588 | 515 | 494 |
| Step to 121+ °C | 4 | 4 | 5 | 4 |

| | | | | |
|---|---|---|---|---|
| 1. CR = crown temperature | | | | |
| 2. ISSR = inside serial side rib temperature | | | | |
| 3. OSSR = outside serial side rib temperature | | | | |
| 4. Used slit die having geometry of 1.0x10 mm. | | | | |

**TABLE III**

| **Number** | **Slit Die Geometry (mm)** | **Extrudate Thickness (mm)** |
|---|---|---|
| 1 | 1.9 x 10 | 3.8 |
| 2 | 1.0 x 10 | 1.3 |

The tire splice rubber as well as the tire cushion rubber of Table II were cured by placing the tire inside a rubber envelope which was then placed inside a pressurized autoclave at 260°F (127°C) for about 150 minutes.

As apparent from the test data of Table II, the results of utilizing an extruded high percentage synthetic rubber or natural rubber for the spliced material are indistinguishable from the control examples which utilized calendered natural rubber. In a separate experiment, the thickness of extrudate as a function of die geometry was determined and are shown in Table III. Clearly the 1.0x10 mm die is preferred to 1.9x10 mm die for experimental tire building as the extrudate thickness was closer to that of calendered strip - 1.7 mm (*vide supra*). Both the hot extruded natural rubber and the high percentage synthetic rubber extruded through 1.0x10 mm die were highly tacky and was able to hold precured tread splices together without the need of any splice cement.

The present invention and process can be utilized to splice generally any type of tires including aircraft tires, vehicle tires and especially truck tires. The present invention has many advantages inasmuch as it eliminates the need of applying an adhesive, and/or calendering the splice strip which is time consuming, and hence reduces the cost of making tires. It also eliminates the need to utilize solvent-based adhesives as well as eliminates the need of plastic film to roll the calendered spliced rubber.

## Claims

1. A process for splicing a retread tire (10), characterized by comprising the steps of:
extruding a rubber splice composition;
applying said extruded rubber splice composition directly to a spliced area (50) between two tire tread ends; and heating and curing said rubber splice composition; and wherein said tire tread ends are free of any adhesive other than said extruded rubber splice composition.

2. The process according to Claim 1 characterized in that said rubber splice composition is comprised of natural rubber and synthetic rubber having high tack before cure; wherein said rubber is comprised of at least 40 weight natural rubber, based on said natural and synthetic rubbers; and wherein said rubber splice composition contains tackifiers.

3. The process according to Claim 2 characterized in that said synthetic rubber contains a bis-imide compound.

4. The process according to any of the preceding claims 2 or 3 characterized in that said rubber splice composition is a high tack synthetic rubber-natural rubber blend.

5. The process according to Claim 2 characterized in that said high percentage synthetic rubber contains at least 55% by weight based of said synthetic rubber based upon the total weight of said synthetic rubber and said natural rubber, and wherein said blend contains a bis-imide compound.

6. The process according to the preceding claims 3 or 5 characterized in that said bis-amide compound has the formula 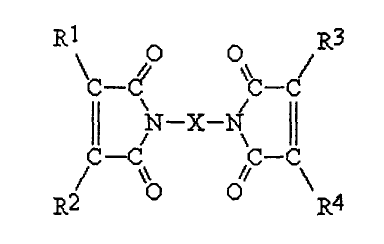 where R¹, R², R³, and R⁴, independently, are hydrogen, an alkyl group having from 1 to 5 carbon atoms, a phenyl group, an alkylphenyl group having 7 to 10 carbon atoms or a halogen substituted alkyl group having from 1 to 5 carbon atoms, a halogen substituted phenyl group, or a halogen substituted alkylphenylene group having a total of from 7 to 10 carbon atoms, and where X is an alkylene group having from 1 to 5 carbon atoms, a phenylene group, an alkylphenylene or alkylenephenyl group having 7 to 10 carbon atoms or a halogen substituted alkylene group having from 1 to 5 carbon atoms, a halogen substituted phenylene group, or a halogen substituted alkylphenylene or alkylenephenyl group having a total of from 7 to 10 carbon atoms, and wherein the amount of said bis-imide compound is from 0.1 to 10 parts by weight per 100 parts by weight of said cushion vulcanizable elastomer.

7. The process according to any of the preceding claims characterized in that said tire tread (40) is cured.

8. The process according to Claim 7 characterized by applying said rubber splice composition to one tire tread end and pushing the remaining tire tread end into contact with said rubber splice composition before heating and curing.

9. A process for splicing a rubber article characterized by comprising the steps of extruding a rubber splice composition into an area between two rubber articles, and heating and curing said rubber splice composition.
